# EUROPEAN PATENT SPECIFICATION

(11) **EP 2 569 262 B1**
(45) Date of publication and mention of the grant of the patent: **22.08.2018**
(21) Application number: 11722232.3
(22) Date of filing: 10.05.2011
(51) Int. Cl.: C05F 17/02, C05F 17/00, C02F 3/28, C11B 13/00

(54) **BIOLOGICAL PROCESS FOR CONVERTING ORGANIC BY-PRODUCTS**
BIOLOGISCHES VERFAHREN ZUR UMWANDLUNG VON ORGANISCHEN NEBENPRODUKTEN
PROCÉDÉ BIOLOGIQUE POUR CONVERTIR DES SOUS-PRODUITS ORGANIQUES

(30) Priority: 11.05.2010 US 777368; 26.04.2011 US 201113093965
(43) Date of publication of application: 20.03.2013
(73) Proprietor: PMC Biotec Company, Exton, PA 19341 (US)
(72) Inventor: ROZICH, Alan, F., West Chester PA 19380 (US)
(74) Representative: Bühler, Dirk
(86) International application number: PCT/US2011/035854
(87) International publication number: WO 2011/143169

(56) References cited:
- WO-A1-00/02832
- WO-A1-92/13084
- WO-A1-96/23736
- WO-A1-2004/029001
- FR-A1- 2 620 439
- US-A- 4 342 650
- US-A- 4 696 746
- US-A- 5 141 646
- US-A- 6 059 971
- US-A1- 2009 181 436
- US-A1- 2010 261 918

## Description

### CROSS-REFERENCE TO RELATED APPLICATIONS

The present application claims the benefit of Application Serial No. 12/777,368, filed May 11, 2010, entitled BIOLOGICAL PROCESS FOR CONVERTING ORGANIC BY-PRODUCTS OR WASTES INTO RENEWABLE ENERGY AND USABLE PRODUCTS; and Application Serial No. 13/093,965, filed April 26, 2011, entitled BIOLOGICAL PROCESS FOR CONVERTING ORGANIC BY-PRODUCTS OR WASTES INTO RENEWABLE ENERGY AND USABLE PRODUCTS.

### FIELD OF THE INVENTION

The present invention relates to the conversion of organic waste materials or by-products. More particularly, the present invention relates to biological processes for converting these materials into renewable energy and conveniently marketable fertilizer products. These processes are intended to realize high organic conversion rates, and the efficient production of renewable energy products and valuable co-products.

### BACKGROUND OF THE INVENTION

Numerous processes have been developed over the years for the conversion of organic materials into renewable energy and useable products. Organic materials that are candidates to be renewable include sewage sludge, food wastes, agricultural wastes, organic municipal solid wastes and other organic materials. Many technologies use a variety of thermal approaches such as incineration, gasification, and pyrolysis. Various forms of heat are introduced using different methods, such as the burning of fuels or using more exotic methods, such as plasma arcs. The major problem with incineration approaches to renewable energy applications is that most renewable energy feedstocks have relatively high water contents. A high water content means that before the organic material can be oxidized, heat (energy) must be used to remove the water and the incineration process must then overcome a significant physical obstacle, namely evaporating the water and the associated latent heat of vaporization. The latent heat of vaporization for water means that, in order for the water to reach a temperature of 212°F (100°C), approximately 970 BTUs are required to vaporize 1 pound of water or about 8,080 BTUs to vaporize one gallon of water before the organics can then be oxidized using a thermal process. Unless the feedstock has a reduced water content (less than 50%), this BTU requirement represents an onerous energy sink for these processes. Furthermore, this onerous energy sink means that it is difficult to apply these processes using feedstocks containing high water contents while at the same time realizing a net positive energy production. This is so because a significant portion of the BTUs produced by oxidizing the organic matter are off-set by the BTU requirement mandated by the latent heat of vaporization that is connected with volatilizing water that is intrinsic with target feedstocks.

Biological processes contrast radically with incineration processes. Essentially all biological processes employ microorganisms to achieve target process goals. Microorganisms utilize enzymes to catalyze reactions so as to facilitate conversion of target feedstocks to renewable fuels and other valued co-products. It is crucial to grasp two important facts. Firstly, the activation energies required for enzymatic reactions are far lower than the activation energies required for analogous physical or chemical reactions. This means that the amount of chemical or the amount of heat required is far less than comparable physical or chemical reactions. Additionally, enzymatic reactions are not impacted by an overabundance of feedstock water content. This fact ameliorates the onerous energy sink which otherwise handicaps incineration processes because of the intermingled latent heat of vaporization issues. The other important fact is that a microbial reactor is a self-sustaining system which manufactures its own enzymes, i.e., chemical reagents. It can be stated that microorganisms are the world's most prolific and most efficient chemical manufacturers. These aspects coupled with the advantageous activation energies associated with enzymatically-catalyzed reactions engender a compelling argument for the application of biological processes for renewable energy applications.

Although microbial systems have robust features that make them attractive for renewable energy applications, there are aspects of these systems which need improvement in order to foster vigorous commercial application. For example, it is common knowledge that anaerobic biological processes can convert organic materials into methane. These systems are cost-effective and relatively simple to operate to those skilled in the art. The disappointment with anaerobic processes is that, even under extremely ideal operating conditions, they are unlikely to convert more than 50% of the organic feedstock into an energy source. This scenario results in the need to dispose of 50% of the unconverted feedstock, which is often the Achille's heel for these anaerobic applications. Similarly, the biological production of ethanol and the use of algal biomass systems for biodiesel and oil production have similar issues in that the preponderance of feedstock or biomass residue remains unconverted into usable energy and must be separately treated and disposed of, often to the severe economic detriment of the overall project. An alternate approach is therefore necessary. One of the objectives of the present invention is thus to foster a greater conversion of target feedstocks into energy in biological renewable energy systems, and to diminish the economic albatross of being encumbered with unconverted feedstock or residual biomass.

The technological objective of fostering greater conversion of organic materials in biological organic waste treatment systems was shown to be possible with the groundbreaking work of Dr. Anthony F. Gaudy, Jr., a professor at Oklahoma State University and at the University of Delaware. Gaudy showed with rigorous laboratory testing and exhaustive ancillary scientific analyses that biological treatment systems could be operated to avoid the production of sludge, i.e., unconverted feedstock or residual biomass. Although Gaudy showed biological systems alone could achieve this goal, he concluded that biodegradation rates could not always be relied upon to achieve timely total organics conversion. Gaudy proposed an alternate strategy that entailed using non-biological techniques, either chemical or physical, to strategically enhance overall system biodegradability. His efforts involved the concept of a "chemical assist" that incorporated a hydrolysis step that was surgically applied to portions of waste biomass in order to enhance the biodegradability of the residue in the biological reactor. He demonstrated with this methodology that a biological system could essentially achieve total organics conversion. It should be noted that, although a chemical or physical role was utilized in the system, the onus of organics conversion was still squarely on the microbes, and the chemical or physical process played a supporting, albeit essential, role in achieving the extraordinary overall system rate of conversion. The remaining challenge was to find a commercially suitable physical or chemical assist methodology and strike an economical balance with the type of biomass reactor system that would be utilized in such a system.

These concepts have been realized, and commercially viable processes have been formulated, which achieve high organic conversion rates full-scale. This technology represented by U.S. Patent Nos. 3,547,814; 3,670,887; 4,246,099; 4,026,793; and 4,652,374 primarily relies on thermophilic aerobic biological treatment with solids separation and an integral chemical treatment step. The chemical treatment step, or in Gaudy's parlance, the chemical assist, was primarily an oxidation procedure that generally consisted of a modified Fenton's reagent procedure. Guidelines were empirically derived for application and integration of the chemical treatment step in these systems to realize economic viability in achieving high levels of organic conversion without minimal or even with no organic residual solids production. The inventor of these patents, Alan F. Rozich, carried out numerous pilots that demonstrated the efficacy of the technology using data to perform rigorous mass and energy balances in order to validate the technology performance. They have in fact successfully installed eleven of these systems as of 2010.

There are many variations in processes associated with the use of biological systems to achieve high conversion rates of organic waste materials that could have relevance for renewable energy applications, as follows:

U.S. Pat. Nos. 3,547,814 ("the '814 Patent") and 3,670,887 disclose the treatment of sewage wherein gross organic solids are first removed from the sewage by screening and the remaining waste is contacted with an oxygen-containing gas and activated sludge. The '814 patent discloses that anaerobic processes have been used to render the sludge non-putrescible and, as noted, require long-term storage. Renewable energy is produced in the form of methane generated in the anaerobic reactor. Another suggested technique for treating such sludge involves extended aeration, which increases the degree of auto-oxidation, with a net reduction of such sludge. Unfortunately, the rate of oxidation is generally too low to have a significant effect on net sludge production. Even with extended aeration and an increased degree of auto-oxidation, particularly at the zero net production of sludge level, problems are presented because of large plant size and high operating costs. To reduce size, these patentees thus suggested using an oxygen-rich gas and a high volatile organic material in the sludge. This resulted in a low sludge yield in the overall process.

U.S. Pat. No. 4,246,099 discloses a combination of aerobic/anaerobic processes to reduce and stabilize sludge solids in an activated sludge process. Renewable energy can be produced in the form of methane from the anaerobic system. In this process, municipal sludge is initially contacted with an oxygen-containing gas under aerobic conditions to partially reduce the biodegradable volatile suspended solids and then anaerobically digested to partially stabilize the sludge. Sludge reduction to less than 40% of the biodegradable volatile suspended solids introduced to the digestion zone can be achieved. The concept of thermal aerobic digestion is referred to as autothermal aerobic digestion (ATAD) where the digester is operated at elevated temperatures, e.g., from about 45°C to 75°C, or in the thermophilic range.

U.S. Pat. No. 4,026,793 discloses an aerobic digestion process for reducing the solids content in a biodegradable organic sludge by carrying out the digestion in a vessel maintained at a temperature within the range of 38°C to 46°C. Renewable energy could be produced in the production of heat in the aerobic reactor which could be used to make hot water.

U.S. Pat. No. 4,652,374 discloses a modified anaerobic fermentation of municipal waste by effecting hydrolysis and acidification of the sewage and then anaerobically digesting the hydrolyzed sewage under conditions for methane generation for renewable energy.

It is also known in a modified extended aeration activated sludge process in combination with autothermal aerobic digestion (ATAD) to use a hydrolytic assist comprising the treatment of the effluent from the ATAD reactor with acid and subjecting the resulting hydrolyzed effluent to biological digestion in the initial aeration zone, where the sewage is contacted with an oxygen-containing gas and activated sludge. Proceedings, 17th Conference on Municipal Sludge Management, HMCRI, Boston, Mass., 1987, pp. 71-77. Renewable energy could be produced in the production of heat in the aerobic reactor, which could be used to make hot water.

As can be seen from this review of substantial prior art pertaining to aerobic processes, including activated sludge processes, many variations have been proposed in an effort to reduce or minimize sludge production and to stabilize excess sludge produced by aerobic processes and achieve high rates of organic or feedstock conversion. All of these processes in one way or another become quite complex and entail high operating costs or capital costs in order to achieve that objective. In most cases, it is extremely difficult to modify these processes in such a way so as to achieve high levels of organic conversion, based on original organic input, let alone achieving concomitant production of renewable energy. The latter goal is one often sought but seldom achieved, resulting in economically unsatisfying results because of the need to treat and dispose of unconverted feedstock and/or residual biomass.

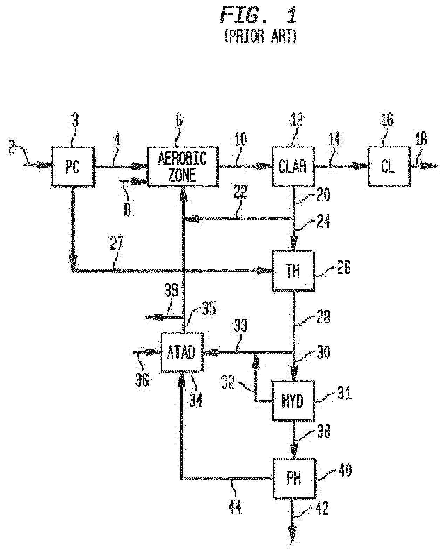

In U.S. Pat. No. 4,915,840 ("the '840 Patent"), the disclosure which is expressly incorporated herein by reference thereto, there is disclosed an improvement for higher rates of organics conversion in an aerobic process wherein municipal waste containing organic matter is biologically digested by contact with an oxygen-containing gas in the presence of biologically active organisms. Renewable energy can be produced in the production of heat in the aerobic reactor which could be used to make hot water. The basic process as shown in FIG. 1 of the '840 patent, is reproduced as FIG. 1 hereof, the disclosure of which, as set forth in the '840 patent from column 4, line 42 through column 7, line 20, is incorporated herein by reference thereto. In particular, the biological digestion of sludges in an autothermal aerobic digestion unit (ATAD) is a known process. In autothermal aerobic digester zone 34, air, or other oxygen-containing gas, e.g., high purity oxygen, is introduced through line 36 at a rate sufficient for the autothermal thermophilic aerobic digestion of the suspended solids. In this process, a temperature of from about 35°C to 75°C is maintained, and the heat generated in the process should be sufficient to maintain temperature without external heating. These autothermal self-heating units contain the metabolic heat generated, and require no external heat addition in order to maintain the autothermal digester at appropriate conditions. The nonconverted product containing organic material of preselected concentration, usually from 0.5 to 2% solids, is removed as effluent from autothermal aerobic digester zone 34 via line 35 and all or a portion is charged to initial aeration digester zone 6. The recycle plus recycle from secondary clarifier 12, is adjusted to give the desired preselected sludge value. With appropriate decay in autothermal digester zone 34, no net sludge generation is possible. That portion not charged to aerobic zone 6 is removed through line 39 for disposal.

It is specifically noted that in the process of the '840 patent, as is shown in FIG. 1 thereof, high organics conversion rates are controlled by means of a portion of thickened biologically activated sludge being contacted in hydrolysis vessel 31 (HYD) with acid, e.g., sulfuric acid or base, e.g., alkali metal hydroxide under conditions sufficient to effect hydrolysis of macromolecular components of the organic cells and effect dissolution of inorganic components. Mild acid hydrolysis is achieved in vessel 31 by adding acid and maintaining a pH in the range of from about 0.5 to 2 at a pressure ranging from atmospheric up to about 30 psig at temperatures ranging from about 80 to 130°C for about 2 to 10 hours, typically about 4 to 6 hours. Alkaline hydrolysis can also be effected, and this is achieved by contacting with alkaline materials, e.g., sodium hydroxide, and maintaining a pH of from about 7 to 12 and a temperature of 20 to 50°C for about 5 to 12 hours. This hydrolytic assist modifies the cell structure of the macromolecular components and renders them essentially soluble and thereby enhances the ability of the biologically active organisms to effect thermophilic decay within the autothermal aeration digester zone 34. By increasing or deceasing the amount of the thickened sludge subjected to hydrolysis, one increases or decreases the rate of decay for the system, and sludge reduction levels can be controlled by controlling the rate of such decay, and thus, the extent of decay. However, since the temperature conditions within the ATAD unit itself can effect some solubilization of these macromolecular components, to that extent, the prior chemical solubilization by hydrolytic assist can be considered to be redundant or inefficient.

Hydrolyzed sludge not charged to autothermal aerobic digester zone 34 may be treated for removal of phosphorous or nitrogen or may be adjusted in pH for optimizing decay in the autothermal aerobic digestion zone. Hydrolyzed sludge is withdrawn from vessel 31 through line 38 and charged to tank 40 wherein pH, for example, is adjusted upwardly to an alkaline level for precipitation of phosphorus compounds which are then removed through line 42. The balance of material in vessel 40 is removed through line 44 and charged to autothermal aerobic digester zone 34.

In accordance with a further improved process, as disclosed in U.S. Patent No. 5,141,646 ("the '646 Patent"), the disclosure of which is incorporated herein by reference thereto, sludge is charged directly to an ATAD reactor from a mixing vessel to provide immediate digestion. During periodic quiescent periods, a portion of settled biomass is then removed from the ATAD reactor and charged to a hydrolysis unit for treatment with a strong acid or base solution. The settled biomass is permitted to hydrolyze for a period of time, preferably at least about six hours, and is then returned to the mixing chamber upstream of the ATAD reactor. The hydrolysate is mixed with the incoming sludge which is then fed directly to the ATAD reactor. The incoming sludge neutralizes the hydrolyzed stream to bring it to a desired pH 7. The hydrolyzed sludge, which is above room temperature, also helps to heat up the incoming feed sludge. Periodically, purified decant is removed from the ATAD reactor and returned to the plant.

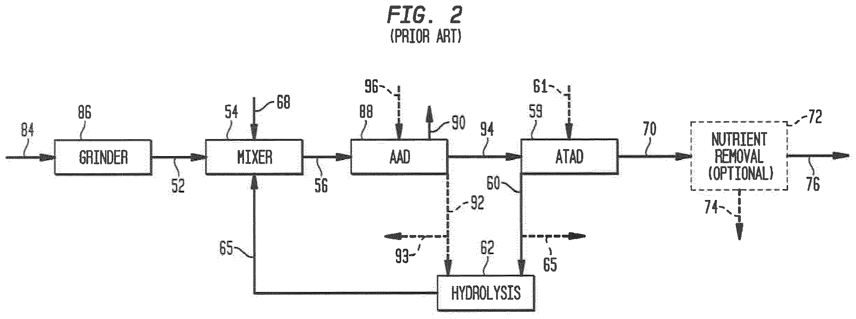

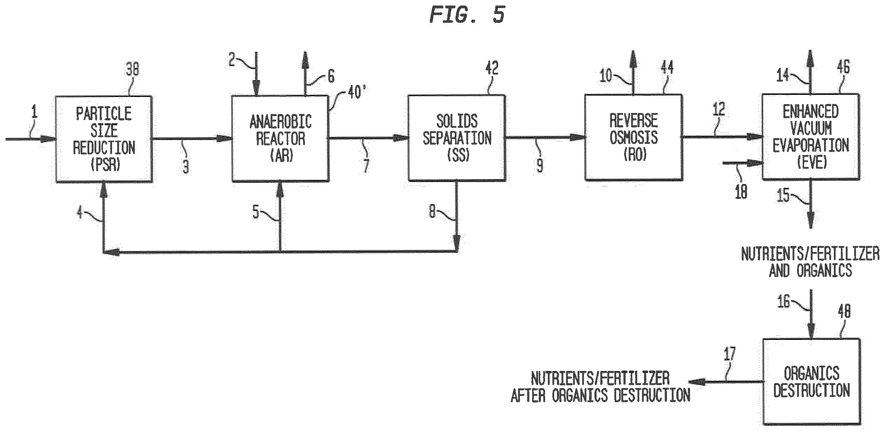

A particularly preferred embodiment of the process is shown in FIG. 5 of the '646 patent, and is reproduced in FIG. 2 hereof. In this process, the sludge or solid waste comprising approximately 8% solids may be fed to the grinder 86 via line 84 and thereafter to the mixer 54 via line 52. The sludge is thereafter passed via line 56 to an autothermal anaerobic digestion (AAD) unit 88 where methane gas for renewable energy is drawn off via line 90. Optionally (via line 92), settled biomass from the AAD unit may be hydrolyzed in unit 62 and recirculated to the mixing chamber 54. If necessary, excess sludge may be removed via line 93 upstream of the hydrolysis vessel 62.

The AAD unit 88 is an autothermal anaerobic digestion device. Renewable energy is produced in the form of methane generated in the anaerobic reactor. It is similar to the ATAD reactor 58, except that it requires higher input solids concentration and it is anaerobic, so that no oxygen (aeration) is supplied. The AAD unit is designed to extract energy from the sludge or trash prior to ultimate stabilization by means of composting. Water and/or nutrients may be added to the AAD unit, if desired, through line 96. AAD decant from unit 88 is fed to the ATAD reactor 58 through line 94.

A portion of the ATAD biomass is settled and removed as before, and returned to the hydrolysis unit 62 through line 60, the hydrolyzed stream feeding into mixer 54 through line 66. Purified decant from the ATAD reactor may be returned to the plant through line 70, or introduced into a nutrient removal device 72, as described above. Treated decant is returned to the plant through line 78.

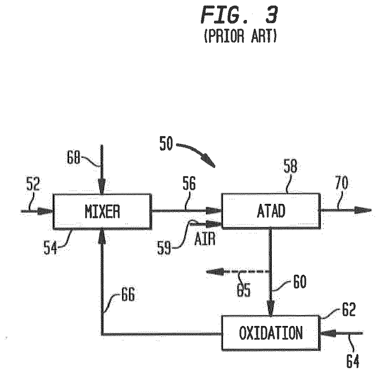

In U.S. Patent No. 5,492,624 ("the '624 Patent"), which is expressly incorporated herein in its entirety by reference thereto, there is disclosed an improvement for higher rates of organics conversion in an aerobic process wherein municipal waste containing organic matter is biologically digested by contact with an oxygen-containing gas in the presence of biologically active organisms. The major difference in the approach between the '624 patent and the '840 patent is that the '624 patent uses an oxidation method instead of a hydrolysis method for enhancing organic conversion rates. A preferred embodiment of the '624 is shown in FIG. 3 of the '624 patent and is reproduced here as FIG. 3. The '624 patent also discloses several versions including one that make renewable energy by means of methane production in an anaerobic step. The key difference between the '624 patent and the '840 patent is that the '624 patent relies on an oxidation procedure, which has been shown to be commercially viable. Although the technology embodied in the '624 patent is commercially viable and has demonstrated high rates of conversion for organic feedstocks, this technology can be somewhat expensive because of the reliance on an oxidation procedure. This has constrained the broader application of the technology for renewable energy applications, particularly for the implementation of high conversion anaerobic systems.

WO 00/2832 A1 discloses a composting machine for decomposition of compostable waste comprising a vessel, a waste inlet at the bottom of the vessel, means for shredding waste supplied to the inlet, an agitator in the vessel, air nozzles for supply of air to the vessel, a discharge pipe for decomposted waste at the top of the vessel, and means for providing a flow of air from the air nozzles through the vessel and the waste therein to the surrounding through an air outlet

WO 92/13084 A1 relates to a process and an apparatus for the biological treatment of essentially solid organic material. The material is successively treated in a hydrolysis tank and in an anaerobic methane reactor. Preferably, the material is pre-treated mechanically in a destructor.

US 4,342,650 A discloses a method for converting substantially untreated organic sludge into useful substances comprising the steps of disintegrating organic solids in the sludge into organic particulate matter; thereafter hydrolyzing the particulate matter in the sludge by adding thereto at least one of hydrolytic enzymes and hydrolytic enzyme producing micro-organisms and holding the particulate matter; rupturing the hydrolyzed particulate matter to form a colloidal slurry and thereafter using the slurry (see claim 1). The disintegrating step preferably comprises comminuting the organic solids into reduced size solids.

WO 2004/029001 A1 discloses a composting system including a vertically-orientated vessel with a range of mechanisms attached to a vertically oriented central mounted rotating shaft, including rotatable size reduction blade(s), agitation mechanism(s), and discharge blade/mechanism(s). The composting system includes internal size reduction mechanism for reducing the size of waste and/or organic material introduced to the vessel. The composting system includes a loading hatch through which material may be introduced into the vessel, a discharge hatch through which material may be removed from the lower region of the vessel, and a source of air to maintain aerobic conditions within said vessel. When the apparatus is in use, material introduced to the vessel moves from the upper region of the vessel gravitationally and via agitation through a zone of size reduction to the lower region of the vessel. Process conditions within the vessel are controlled via intervention by an operator and via electronic control mechanism, which can monitor operating conditions such as temperature and loading rate (for example), to manage air injection, mechanical agitation and size reduction such that composting proceeds efficiently and at an optimal rate.

The search has therefore continued for improved processes for treating organic wastes and sludge materials for producing renewable energy without the onerous burden of unconverted feedstock and/or residual biomass disposal. These patentees have carried out significant pilot work in order to demonstrate that anaerobic systems can be operated in accordance with some of the methodology in the above patents in order to achieve high destruction rates of organic feedstocks (80% <) with a concomitant increase in methane/renewable energy production. Despite successful results, the economic viability of these systems is still lacking. Thus, despite having proof of process that a biological system could be applied for renewable energy production with high feedstock conversion and low residuals production, the search has continued for a commercially viable approach.

### SUMMARY OF THE INVENTION

In accordance with the present invention, these and other objects have now been realized by the invention of apparatus for the treatment of an organic waste stream comprising a biological reactor for the biological digestion of the organic waste steam to produce a converted biomass, an inlet conduit for feeding the organic waste stream to the biological reactor, an outlet conduit for removing the converted biomass from the biological reactor, and a particle size reduction member associated with the inlet conduit for mechanically reducing the average particle size of the organic waste stream to a predetermined particle size prior to its entry into the biological reactor, the particle size reduction member being capable of reducing the average particle size of the organic waste stream by mechanical means while simultaneously mixing the organic waste, characterized in that excess biomass that is generated in the bioreactor and/or unconverted particulate organics are also introduced to the particle size reduction member, and in that the apparatus also comprises a means for measuring the biodegradation rate in said biological reactor at a plurality of particle sizes, wherein the impact of the mean particle size on the biodegradation rate is determined, and wherein the internal configuration of the particle size reduction member is then adjusted to produce the necessary mean particle size output for the target feedstock and biomass. Thereby the efficiency of the biological reactor is increased. In a preferred embodiment, the particle size reduction means is capable of reducing the average particle size of the organic waste stream by at least about 50%. In a preferred embodiment, the efficiency of the biological reactor is increased by at least about 50%.

In accordance with one embodiment of the apparatus of the present invention, the particle size reduction member includes a housing, circulation means for continuously circulating the organic waste stream within the housing, and attrition means for contacting the organic waste stream during the circulation for causing attrition and reduction of the average particle size therein. Preferably, the attrition means comprises paddle members. In a preferred embodiment, the attrition means includes bead members.

In accordance with another embodiment of the apparatus of the present invention, the apparatus includes a recirculation conduit for recirculation of at least a portion of the converted biomass from the outlet conduit to another particle size reduction member. Preferably, the other particle size reduction member comprises the same particle size reduction member associated with the inlet conduit.

In accordance with another embodiment of the apparatus of the present invention, the biological reactor comprises an aerobic or anaerobic biological reactor.

In accordance with another embodiment of the apparatus of the present invention, the apparatus includes a decanter associated with the outlet conduit for separating a clear decant from the converted biomass.

In accordance with the present invention, apparatus has also been devised for the treatment of an organic waste stream comprising a biological reactor for the biological digestion of the organic waste stream to produce a converted biomass, an inlet conduit for feeding the organic waste stream to the biological reactor, an outlet conduit for removing the converted biomass from the biological reactor, and a particle size reduction member associated with the inlet conduit for mechanically reducing the average particle size of the organic waste stream to decrease the viscosity prior to its entry into the biological reactor, the particle size reduction member being capable of reducing the viscosity of the organic waste stream to a viscosity of between about 300 and 2,500 centipoise by mechanical means while simultaneously mixing the organic waste stream, characterized in that excess biomass that is generated in the bioreactor and/or unconverted particulate organics, are also introduced to the particle size reduction member, and in that the apparatus comprises a means for measuring the biodegradation rate in said biological reactor at different feedstock viscosities, wherein the impact of the feedstock viscosity on the biodegradation rates is determined, and wherein the internal configuration of the particle size reduction member is then adjusted to produce a suitable feedstock viscosity for the target feedstock and biomass. Thereby the efficiency of the biological reactor is increased. In a preferred embodiment, the particle size reduction means is capable of reducing the viscosity of the organic waste stream to at least 3,000 centipoise.

In accordance with another embodiment of the apparatus of the present invention, the efficiency of the biological reactor is increased by at least about 50%, preferably at least about 60%.

In accordance with the present invention, the above objects have also been realized by the invention of a method for the treatment of organic waste comprising providing the organic waste at a predetermined average particle size and an associated optimum biodegradability, reducing the predetermined average particle size by a predetermined amount, preferably by at least about 50%, and preferably at least about 65%, so as to provide a reduced particle size organic waste stream having an increased feedstock biodegradability, and subjecting the reduced particle size organic waste stream to biological digestion in a biological reactor so as to convert at least a portion of the reduced particle size organic waste stream into a converted biomass, characterized in that excess biomass that is generated in the bioreactor and/or unconverted particulate organics, are subjected to particle size reduction together with the organic waste stream, and in that the method comprises measuring the rate of biodegradation in said biological reactor, and adjusting said predetermined amount of said particle size reduction in order to optimize said rate of biodegradation in said biological reactor.

In accordance with one embodiment of the method of the present invention, the method includes reducing the predetermined average particle size by at least about 50%. In accordance with a preferred embodiment of the method of the present invention, the efficiency of the biological reactor is increased by at least about 50%.

In accordance with one embodiment of the method of the present invention, the method includes separating a clear decant from the converted biomass. In a preferred embodiment, the method includes reducing the size of at least a portion of the converted biomass to produce a further reduced particle size biomass stream. In a highly preferred embodiment, the method includes analyzing the biological reactor in order to determine optimum range of average particle size for the organic waste stream to be treated in the biological reactor, and conducting the step of reducing the predetermined particle size based on the optimum range of the average particle size whereby the biodegradability of the converted biomass is optimized.

In accordance with one embodiment of the method of the present invention, the reducing step is carried out at a pH of between about 2 and 13.

In accordance with another embodiment of the method of the present invention, the biological reactor can be an aerobic or an anaerobic biological reactor.

In accordance with another embodiment of the method of the present invention, the biological reactor is maintained at a temperature of between about 10 and 100°C. In accordance with another embodiment of the method of the present invention, the biological reactor is maintained at a pH between about 2 and 12, preferably about 7.

In accordance with the present invention, a method has also been provided for treatment of an organic waste stream comprising providing the organic waste stream at a predetermined average particle size and associated optimum biodegradability, reducing the predetermined average particle size by a predetermined amount by mechanical attrition so as to provide a reduced particle size organic waste stream having an increased feedstock bioavailability, subjecting the reduced particle size organic waste stream to biological digestion in a biological reactor so as to convert at least a portion of the reduced particle size organic waste stream into a converted biomass, characterized in that excess biomass that is generated in the bioreactor and/or unconverted particulate organics, are subjected to particle size reduction together with the organic waste stream, and in that the method comprises measuring the rate of biodegradation in the biological reactor, and adjusting the predetermined amount of the particle size reduction in order to optimize the rate of biodegradation in the biological reactor. Thereby the efficiency of the biological reactor is optimized. In a preferred embodiment, the predetermined amount of the average particle size reduction is by at least about 50%. In another preferred embodiment, the efficiency of the biological reactor is increased by at least about 50%.

In accordance with the present invention, a method has been provided for the treatment of an organic waste stream comprising providing the organic waste stream at a predetermined average particle size, reducing the predetermined average particle size by mechanical attrition so as to provide a reduced particle size and reduced viscosity organic waste stream, increasing the soluble organic content of the organic waste stream, and subjecting the increased solids content organic waste stream to biological digestion in a biological reactor so as to convert at least a portion of the reduced particle size organic waste stream into a converted biomass, whereby the efficiency of the biological reactor is increased. In a preferred embodiment, the method includes increasing the solids content of the organic waste stream by over 100%.

In accordance with another embodiment of the method of the present invention, the method includes increasing the solids content of the organic waste stream to a solids content of between about 5% and 10%. In a preferred embodiment, the method includes increasing the solids content of the organic waste stream to a solids content of greater than about 5%. In another embodiment, the method includes increasing the solids content of the organic waste stream to a solids content of between about 5% and 8%.

In accordance with another embodiment of the method of the present invention, the method includes separating nitrogen and phosphorous from the clear decant to produce a purified clear decant. Preferably, the nitrogen and phosphorous are separated utilizing a membrane. In another embodiment, however, the nitrogen and phosphorous are separated using an evaporative cooling device in order to produce a liquid fertilizer and potable water. In a preferred embodiment, the biological reactor is an anaerobic reactor, whereby methane is generated as well as heat in order to drive the production of the liquid fertilizer and potable water. In another embodiment, the biological reactor is an aerobic biological reactor. In accordance with another embodiment of the method of the present invention, the reducing step is carried out using a particle size reduction reactor.

In accordance with the present invention, an organic waste stream or feedstock containing particulate material is fed to a particle size reduction device or reactor prior to producing a conditioned organic material which is then fed to biological digestion in a biological reactor. The biological reactor can use any type of biomass, albeit it aerobic or anaerobic, and can operate over a wide range of temperatures, pH values, and the like. Biomass is produced in the biological reactor and is then separated so as to produce a clear decant. The separated biomass can then be conveyed to the particle size reduction device for further conditioning as may be deemed appropriate. One advantage of using a particle size reduction reactor over using an oxidizing step as shown in the '624 Patent or a hydrolysis step as shown in the '840 Patent is that in the case of using pure particle size reduction in accordance with this invention chemical usage is drastically reduced. In the case of hydrolysis, copious amounts of dissolved solids are thus produced, providing a potential basis for adversely affecting various downstream processes. In the case of oxidation, on the other hand, various oxidants can present a safety hazard, can be expensive, and can trigger regulatory complications if stored on site in large quantities. Furthermore, the use of a particle size reduction device can be optimally integrated with the target biological system by modifying the internal configuration of the particle size reduction device itself. Such internal modifications will enable the practitioner to operate this device in order to select specific size ranges for the treated particulate organics subsequently to be fed to the biological reactor. Ancillary kinetic testing using the biomass for the biological reactor can determine the optimal output particle size and/or viscosity from the particle size reactor in order to optimize the overall system performance in achieving complete organic conversion therein. Again in contrast, the oxidation step, such as that in the '624 Patent, or the hydrolysis step, such as that in the '840 Patent, is far more random in achieving enhanced biodegradability. Using a particle size reduction and/or viscosity reduction device provides for a much better level of control in order to enhance the biodegradability of particulate organic feedstocks. A further comparison of the present invention with the prior art teachings, such as those of the '840 and '624 Patents, entails the particular method used to increase the biodegradability of organic feedstock and/or biomass. In the '840 and '624 Patents, reliance is placed on chemical reactions in order to enhance feedstock/biomass degradability. In connection with the particle size reduction device hereof, a grinding approach is employed. Furthermore, it is noted that grinding is not only effectuated by the internal apparatus of such a particle size reduction device, but is also achieved in large part with organic particle-to-particle collisions. It can thus be seen that the performance of the particle size reduction device and enhanced biodegradability are thus achieved with higher solids concentration inputs to the particle size reduction device since higher solids concentrations create more particle-to-particle collisions. The chemical approach provided in the prior art such as the '840 and '624 Patents thus does not have this advantageous performance feature. Indeed, to those skilled in this art feeding a higher solids concentration to a reactor in order to realize improved results would appear to be counterintuitive. This feature of the present invention thus creates process efficiencies and economic improvements in comparison to the prior art.

In accordance with one aspect of the present invention, a process is provided which includes feeding a target particulate organic feedstock to a particle size reduction device in which the internal mechanisms have been calibrated so as to produce a biodegradably optimal particle size mixture. This mixture is then conveyed to a biological reactor, and preferably the process also includes separating the biomass and any unconverted organic feedstock solids from the liquor. These separated solids and biomass can then be returned to the same or another particle size reduction device for further conditioning and a clear decant can then be discharged from the solids separator.

By utilizing the process of this invention, the particle size reduction step will have the flexibility to produce treated feedstocks with specific particle size and distribution constituencies. Preferably, the particle size reduction step can be operated over a wide range of pHs and temperatures. The process of this invention also includes separating at least a portion of the biomass from the clear decant prior to the biomass being fed to the particle size reduction step. Preferably, the particle size reduction step is carried out at a pH which can achieve optimal enhancement of the biodegradability of the target feedstock.

The process includes subjecting the organic waste to biological digestion in any type of biological reactor over a wide temperature range of between about 10 and 100°C, and preferably operating over a wide pH range of from about 2 to 12, most preferably about 7. The particle size reduction device itself will generate its own heat due to the friction resulting from the grinding action taking place therein. This heat can then be used to add heat to the biological reactor in order to enable that reactor to operate at higher temperatures. This can be particularly advantageous for anaerobic systems which normally must rely on expensive heating systems. It, however, is also advantageous for aerobic systems since the added heat can enable such systems to operate in the thermophilic range and thus realize added benefits due to the robust biodegradation kinetics of thermophilic aerobic reactors.

With the process of the present invention it is further possible to remove nitrogen and phosphorous from the clear decant to produce a purified clear decant. Preferably, the nitrogen and phosphorous are concentrated using membranes or a low temperature (about 150°F (65.5°C)) evaporative cooling device to produce a high value liquid fertilizer. This process thus not only produces a high value liquid fertilizer but also produces potable water. If evaporative cooling is used in conjunction with an anaerobic biological process, the heat generated from the conversion of methane generated by the anaerobic unit is usually sufficient to drive the production of liquid fertilizer and potable water in that process. If a thermophilic aerobic biological process is utilized as the biological reactor, the fluid exiting the biological reactor will already be at 150°F and additional heat will not be required. If membranes are utilized to create the liquid fertilizer and potable water, the ammonia nitrogen must be converted to a nitrate to permit removal of the nitrogen. Alternatively, the nitrogen can be removed biologically, and the phosphorous can be removed by precipitation.

### BRIEF DESCRIPTION OF THE DRAWINGS

Other objects and advantages of the present invention will become apparent form an analysis of the following detailed description, which refers to the drawings, in which:
Fig. 1 is a block flow diagram of an activated sludge process incorporating a hydrolytic assist for an autothermal aerobic digestion zone for enhanced sludge reduction as set forth in U.S. Patent No. 4,915,840;
Fig. 2 is a block flow diagram of an activated sludge process in which a portion of the biomass from the ATAD reactor is hydrolyzed in a hydrolysis vessel and the hydrolyzed effluent is then returned to the input of the ATAD reactor in accordance with U.S. Patent No. 5,141,646;
Fig. 3 is a block flow diagram of a waste treatment process employing oxidization in accordance with U.S. Patent No. 5,492,624;
Fig. 4 is a block flow diagram of the organic byproducts and/or waste conversion process in accordance with the present invention;
Fig. 5 is a block flow diagram of yet another waste treatment process in accordance with the present invention;
Fig. 6 is a block flow diagram of yet another embodiment of a waste treatment process in accordance with the present invention;
Fig. 7 is a block flow diagram of another waste treatment process in accordance with the present invention;
Fig. 8 is a block flow diagram of yet another waste treatment process in accordance with the present invention;
Fig. 9 is a block flow diagram of yet another embodiment of a waste treatment process in accordance with the present invention;
Fig. 10 is a block flow diagram of another waste treatment process in accordance with the present invention.

### DETAILED DESCRIPTION

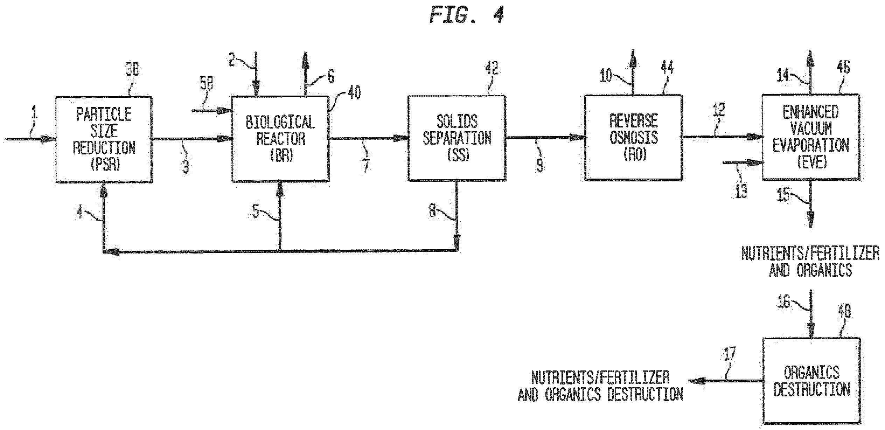

Referring to the Figures, in which like reference numerals refer to like portions thereof, FIG. 4 shows a generic biologically-based system, i.e., one which could employ either an anaerobic biomass, a thermophilic aerobic biomass, or a mesophilic biomass for conversion of organic wastes to energy and/or useable products. Organic wastes which are high in solids content, preferably including about 6% solids or more, are first conveyed through line 1 to a particle size reduction device 38. Organic wastes, which have a solids content of approximately 2% or less, or whose biodegradability is not significantly enhanced with a particle size reduction (PSR) step, can be conveyed directly to the bioreactor 40 through line 2. Excess biomass that is generated in the bioreactor and/or unconverted particulate organics, are also introduced to the PSR device 38 through line 4.

The proper functioning and operation of the PSR device are important elements for use in connection with the present invention. One crucial objective of the PSR device 38 is to optimally enhance the biodegradability of the target feed stream entering the reactor through line 1, and the return organics stream which enters the PSR device 38 through line 4, for the particular feedstock that is being processed and the particular biomass that is responsible for the bulk of the conversion. Optimal enhancement of biodegradability does not mean using a technically nonspecific approach, such as extreme hydrolysis or heat treatment (Zimpro or Porteus process) in order to increase the feedstock or return biomass or unconverted particulate organics solubility. These approaches will increase feedstock biodegradability, but at a great energy and chemical expenditure. Furthermore, these approaches are not likely to be kinetically optimal insofar as the target biomass is concerned, and will in all likelihood result in over-treatment of the target feedstock, while also failing to leverage the inherent biokinetic capacity of the biomass to metabolize the treated target feedstock. Similarly, the aforementioned '624 Patent uses an oxidation step which, although representing an improvement over the aforementioned methods, still falls short. The '624 Patent uses an oxidation step which, although the '624 Patent advocates judicious and measured utilization, has some of the shortcomings of the hydrolysis and heat treatment methods in that it is not able to be kinetically precise for a target biomass. Additionally, the oxidation approach advocated in the '624 patent oxidizes portions of the feedstock, thus decreasing the overall oxidation state of the feedstock rendering it a lesser desirable fuel source. If a primary objective of the overall process is to generate energy, a portion of the fuel is needlessly oxidized thereby *a priori* robbing this overall process of the ability to maximize energy output. Thus, an oxidation step in concert with a biological step, while suitable and efficacious for applications where the primary objective is destruction of organic solids, falls short when the primary process objectives are energy and useable product creation.

The primary challenge then is how to utilize and integrate a PSR approach such that it is biokinetically optimal and relevant without the shortcomings of the previously-mentioned methods. The answer lies in recognizing and integrating the biochemical requirements for optimal feedstock biodegradability enhancement along with the subtleties of particle size reduction. This integration of these two techniques forms the basis for the significance of the present invention. The biodegradation of particulate organics requires the use of exocellular enzymes which are excreted by microorganisms to prepare and to strategically fragment target particulate organic compounds for transport across cellular membranes. The resulting chemical moieties are then conveyed into the intracellular biochemical machinery for cell energy production, catabolic pathways, and for biosynthetic, or anabolic, pathways. The key biochemical point which is necessary to recognize is that of enzyme specificity. Insofar as it relates to the present invention, exocellular enzyme specificity for a given feedstock, pH, temperature, and other environmental conditions for the particular biomass that is employed in the bioreactor is of paramount importance, and an irrefutable technical reality. Thus, the ultimate goal for a perfected process step, such as the use of a PSR device for increasing the biodegradability of target feedstock and/or excess biomass, is to ensure that the resulting particulate organic fragments that are produced are optimally configured for use as a substrate for the particular exocellular enzymes in the target biomass system. If the particles are too large, the overall process kinetics are hampered. If the particles are too small, it results in an inefficient use of the inherent biochemical capability of the system and will likely waste some energy, chemicals, or both.

Achieving process parity between the PSR device and the biokinetic capability of the biomass as it relates to the target feedstock is essential. Organic by-products such as plant materials, cellulosics, waste biomass, municipal sludges, etc. consist mostly of organic particulates that are comprised of naturally-occurring (as opposed to anthropogenic) organic compounds. PSR devices are capable of reducing these materials to particle sizes of anywhere from about 1,000 nanometers (with a comparable molecular weight of about 500,000) down to less than about 50 nanometers (with a comparable molecular weight of about 20,000). It should be noted that the working definition for solubility, considered from the viewpoint of environmental conditions, is about 450 nanometers for a given substance. Solubility alone, however, is not a determining criterion for PSR performance as it relates to enhancing biodegradation rates. The ultimate criteria for optimizing the PSR performance requirement is not particle size *per se,* but what particle size (and/or feedstock viscosity) is suitable for the particular feedstock and the target biomass. Thus, one determines a required particle size by producing a series of PSR treated feedstock outputs (each PSR output is progressively smaller in terms of mean particle size) and performing biokinetic tests (using respirometric or shake flask (if feasible) methods) to determine the impact of mean particle size and/or feedstock viscosity on target biomass growth rates. A structured protocol provides a comparison of mean particle size and/or feedstock viscosity and biomass growth rate. When decreases in mean particle size or reduction in feedstock viscosity fail to produce substantive increases in biomass growth rate, then the largest mean particle size, where the biomass growth rates have "flattened-out," is selected as the target PSR performance criteria. The internal configuration of the PSR device is then adjusted to produce the necessary mean particle size output for the target feedstock and biomass.

In this manner, a completely customized and optimized process can be devised in order to produce the optimal biodegradation rate without wasting any unnecessary energy in connection with the particle size reduction process itself. Thus, the optimization itself is not determined solely by particle size and/or feedstock viscosity, but instead by the increase in biodegradation kinetics. Such rates can be measured by using respirometric methods in order to measure microbial growth rates on treated feedstocks (*see* Rozich et al., "Design and Operation of Activated Sludge Processes Using Respirometry," Lewis Publishers, Boca Raton, FL (1992), the disclosure of which is incorporated herein by reference thereto). Thus, the maximum growth rates at the largest possible particle sizes and/or higher feedstock viscosity tend to be optimal since less energy is required to make higher particle size feedstocks than small particle size feedstocks.

It is also noted, however, that in addition to enhanced biodegradability, using the particle size reduction step of the present invention also decreases the viscosity of highly concentrated feedstocks, such as the organic waste streams of the present invention, rendering it feasible to feed these materials at higher concentrations into the biological reactors hereof. Since materials having lower viscosities require less energy for mixing purposes and the like, it is therefore possible to feed biological materials to these reactors at higher solids contents, in many cases being able to double the solids contents and increase process efficiency based on the dramatic reduction in sludge viscosity.

The particle size reduction process itself when acting on large molecules such as polymers is able to reduce these molecules to smaller polymer fragments and to monomers which are much easier to biodegrade. It is also noted that in prior art devices such as in U.S. Patent No. 5,492,624 ("the '624 Patent"), in which an oxidation step is used subsequent to the biological reactor, a mere substitution of particle size reduction for the oxidation step in the '624 Patent would not lead one to achieve the unexpectedly superior results of the present invention. That is, it is crucial to the present invention that the particle size reduction take place prior to entry of the organic waste stream into the biological reactor in the first instance. Otherwise, the reduction in viscosity will not be achieved, nor any of the advantages of the present invention.

There are numerous ways to achieve particle size reduction. Particle size-reducing equipment relies on compression, impact, or both. It should be noted that particle-to-particle collisions are also essential to realizing efficient particle size reduction. Compression is applied by means of moving jaws, rolls or a gyratory cone, for example. The maximum discharge size is set by the clearance, which is adjustable. Impact-based equipment commonly uses hammers or various media. Most particle size reduction relies on horizontal flow-through schemes utilizing the approaches listed above. There is however another approach which is the use of vertical or horizontal flow-through devices that employ uniform media or beads. The vertical through-flow PSR approach is a preferred embodiment for use in connection with the present invention. The media used in this type of device are spheres of materials which can have different densities, and can vary from sizes as high as 1.0 millimeter in diameter to as low as 0.03 millimeters in diameter. A critical element in optimization of the present invention is to attempt to ensure that the treated feedstock is biokinetically "calibrated" to the target biomass in order to ensure overall optimum system performance in achieving biological feedstock conversion. A preferred embodiment for the PSR step in the present invention is thus a vertical or horizontal mill with media that can be manipulated, along with parameters such as temperature, pH, etc., to produce a consistent, modified feedstock with improved and superior biodegradation characteristics. Other PSR embodiments that have a similar selectable engineering control regimen are acceptable so long as they are able to provide the same performance as that of the preferred embodiment.

After treatment in the PSR device, the biokinetically-optimized feedstock is conveyed in line 3 to the biological reactor 40. The biological reactor 40 can also be fed by a waste or feedstock stream through line 2, that is low in solids concentration (< 2%) or that contains solids that do not require PSR treatment. The ultimate determination of the need for PSR treatment of the solids contained in the waste stream in line 2 is made on a biokinetic basis. The biological reactor 40 is also fed by a seed inoculum of recycled biomass and partially unconverted feedstock through line 5. Retaining the biomass in the system in this manner enhances overall system performance, maximizes microbial diversity, and provides for robust microbial performance. If the biological system is thermophilic or mesophilic aerobic, it is necessary to feed an oxygen-containing gas into the biological reactor 40 through line 58 for aerobic metabolism.

Biological systems also produce a gas, which is shown exiting the biological reactor 40 through line 6. If the biological system is thermophilic or mesophilic aerobic, the gas is predominantly carbon dioxide. If the biological system is anaerobic, the gas in line 6 is a mixture of carbon dioxide, methane, and hydrogen, with a trace amount of hydrogen sulfide.

A mixture of biomass, unconverted feedstock, and water is conveyed from the biological reactor 40 through line 7 to a solids separation device 42. In a preferred embodiment, the solids separation is carried out by means of an ultrafilter membrane. The rejected particulate material from the solids separation device 42 is conveyed from the biological reactor 40 through line 8, and is either returned to the biological reactor 40 through line 5 or to the PSR device through line 4. Clarified effluent egresses from the solids separation device in Line 9, and is then fed to a reverse osmosis membrane separator 44.

The rejected dissolved solids from the reverse osmosis device 44 are conveyed through line 12, while the purified water is conveyed through line 10. The reverse osmosis device 44 separates water from dissolved solids using a membrane with a pore size of about 0.0006 microns. Further concentration of the rejected dissolved solids in line 12 is required to produce a commercially-convenient "green" liquid nutrient/fertilizer product containing nitrogen compounds, phosphorus, and some organics. The rejected dissolved solids in line 12 are fed to an enhanced vacuum evaporation device 46 to further concentrate the nutrient/fertilizer stream and create additional clean water, which is removed from the enhanced vacuum evaporation device by means of a vacuum in line 14. In order to facilitate evaporative concentration of the nutrient/fertilizer stream in the enhanced vacuum evaporation device 46, heat is applied thereto from an applicable head source through line 13. If an thermophilic biological aerobic reactor is used, there may or may not be any need, even a limited need, for the use of line 13 to supply heat to the enhanced vacuum evaporation device 46. Thus, because thermophilic aerobic reactors are self-heating and there is likely enough heat supplied with the clarified effluent from line 9 to satisfy the heat process requirements of the enhanced vacuum evaporation device 46. If, on the other hand, an anaerobic reactor is employed, the heat for injection into the enhanced vacuum evaporation device 46 through line 13 can be generated by burning methane, which in one embodiment can be conveyed from line 6 to an engine or similar device for the generation of heat. Thus, the excess heat from this step will generally provide ample heat for the process requirements of the enhanced vacuum evaporation device. Finally, if the biological reactor 46 is a mesophilic system, neither heat nor combustible gas are generated therein, and heat necessary in line 13 will have to be from a system-external heat source in order to meet process requirements for the enhanced vacuum evaporation device 46.

The reject from the enhanced vacuum evaporation device 46 is conveyed through line 15. If the feedstock constituents are "green" and without troublesome organic components, then the product in line 15 may be suitable for commercial usage. If, on the other hand, this feedstock contains organic constituents that are not destroyed in the biological step, and which are concentrated in line 15, then this feedstock may be conveyed through line 15 to line 16, which leads to an organics destruction step in an organics distribution device 48, in order to remove troublesome organics. The thus produced decontaminated nutrient/fertilizer stream is then conveyed through line 17, and will be suitable for commercial utilization.

Referring next to Figs. 5, 6, and 7, there are set forth other embodiments of the present invention, which are similar to the embodiment described hereinabove relative to FIG. 4, but which specifically show the incorporation of different biomass systems for the biological reactor 40.

Fig. 5 is an embodiment of the present invention which utilizes an anaerobic reactor 40' for the biological step. The gas in line 6 in this case will thus contain methane, carbon dioxide, hydrogen, and miniscule amounts of hydrogen sulfide. The heat source in this embodiment for the supply of heat through line 18 to the enhanced vacuum evaporation device 45 can be generated by burning the combustible gas that is contained in line 6. All other elements of this embodiment are essentially the same as those shown in Fig. 4.

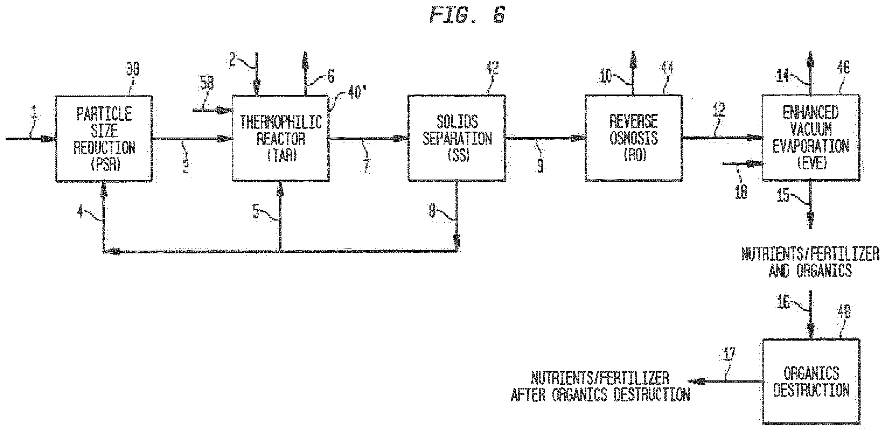

Fig. 6 is an embodiment of the present invention which utilizes a thermophilic aerobic reactor 40" for the biological step. The gas in line 6 in this case will predominantly contain carbon dioxide. Since thermophilic aerobic reactors are self-heating, the heat source in this embodiment for the supply of heat through line 18 to the enhanced vacuum evaporation device contained in line 6, which is brought to a sufficient temperature by the thermophilic aerobic reactor 40'. All other elements of this embodiment are essentially the same as those shown in Fig. 4.

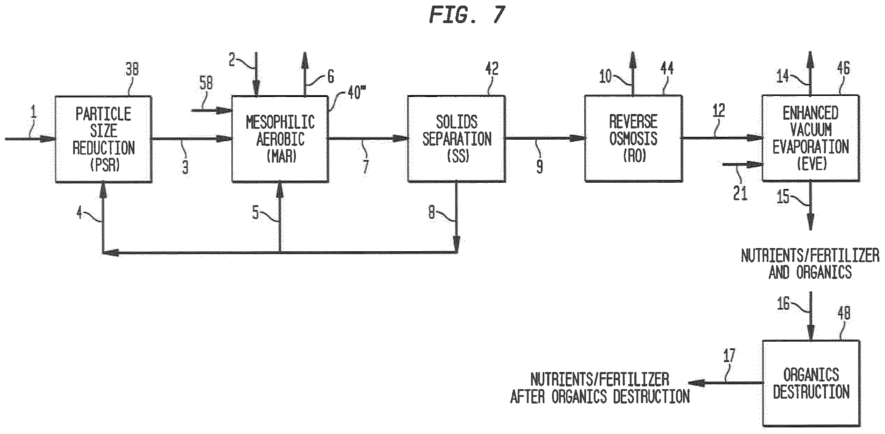

Fig. 7 is an embodiment of the present invention which utilizes a mesophilic aerobic reactor 40" for the biological step. The gas in line 6 in this case will predominantly contain carbon dioxide, oxygen and nitrogen. The heat source in this embodiment for the supply of heat through line 18 to the enhanced vacuum evaporation device 46 is thus supplied from a source that is external to the system, since no combustible gas is present in line 19 and since this type of biological reactor does not create sufficient heat to facilitate the enhanced vacuum evaporation step. All other elements of this embodiment are essentially the same as those process steps shown in Fig. 4.

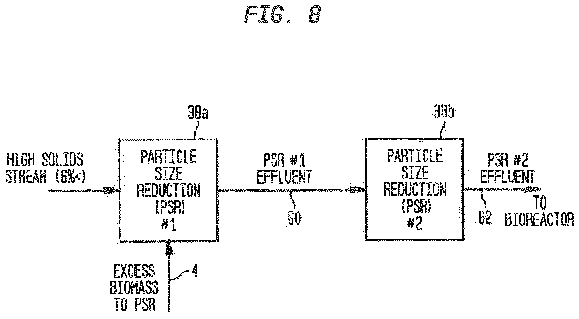

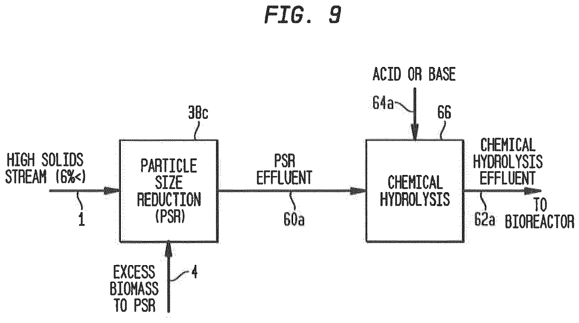

Turning to Fig. 8, this demonstrates an embodiment of the present invention to be incorporated into each of the above-noted variations of that process. Thus, in the embodiment in Fig. 8 a pair of particle size reduction steps are used in series. The purpose of doing so is to create smaller, more biodegradable particles by sequentially reducing particle size using a pair of PSR apparatus in series. The first device particle size reactor 38A does achieve gross particle size reduction, while the second device particle size reactor 38B receives the output from particles size reduction apparatus 38A through effluent line 60, and is able to realize the target optimum particle size range exiting through exit line 62. This embodiment thus enables one to optimize both equipment size and operational power usage. This process step can, for example, be incorporated into the apparatus shown in Fig. 4 with excess biomass being recycled through line 4 into the first particle size reactor 38A. In an alternate embodiment as shown in Fig. 9, a particles size reduction step is followed by a chemical hydrolysis step. The objective of this apparatus is to create smaller, more biodegradable particles by first reducing the particles size using the particle size reduction apparatus and then by using chemical hydrolysis, using either acidic or basic hydrolysis, depending on the nature of the feedstock being processed, and the type of biomass employed in the overall system. Thus, the particle size reduction device in reactor 38C receiving a high solids stream of greater than about 6% through line 1 acts as a "pretreatment" for the more expensive chemical hydrolysis step. In addition, it is often necessary to adjust the pH in the biological reactor itself using either acidic or basic chemicals. In this case, the pH in the biological reactor can at least partially be controlled by adding these chemicals in the hydrolysis step in reactor 66 shown in Fig. 9. This, in turn, facilitates an efficient and dual role for the chemicals themselves by enabling them to concomitantly facilitate feedstock hydrolysis and biological reactor pH control. This, in turn, permits one to optimize the equipment size and operational power usage as well as effectuating efficient chemical usage thereby. Once again, this step can be incorporated into an overall system such as that shown in Fig. 4 hereof.

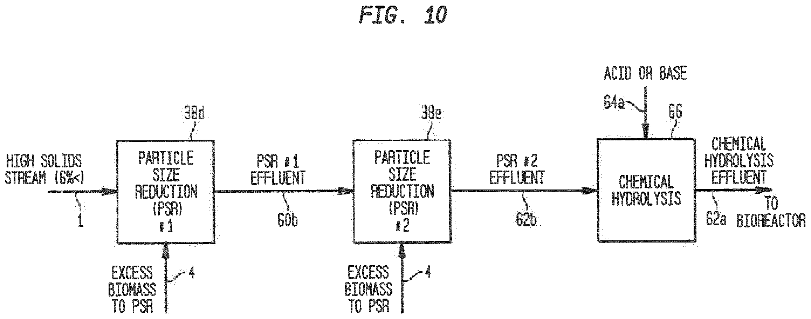

Fig. 10 shows a similar system, but in this case employing two separate particle size reduction steps in reactors 38D and 38E along with a chemical hydrolysis step in reactor 66. This is thus essentially a hybrid of those systems shown in Figs. 8 and 9, and can be similarly incorporated into an overall process such as that shown in Fig. 4.

## Claims

1. Apparatus for the treatment of an organic waste stream comprising
a biological reactor for the biological digestion of said organic waste stream to produce a converted biomass,
an inlet conduit for feeding said organic waste stream to said biological reactor, an outlet conduit for removing said converted biomass from said biological reactor,
a particle size reduction member associated with said inlet conduit for mechanically reducing the average particle size of said organic waste stream to a predetermined particle size prior to its entry into said biological reactor,
said particle size reduction member being capable of reducing the average particle size of said organic waste stream by mechanical means while simultaneously mixing said organic waste,
**characterized in that** excess biomass that is generated in the bioreactor and/or unconverted particulate organics, are also introduced to the particle size reduction member,
and **in that** the apparatus comprises a means for measuring the biodegradation rate in said biological reactor at a plurality of particle sizes,
wherein the impact of the mean particle size on the biodegradation rates is determined, and
wherein the internal configuration of the particle size reduction member is then adjusted to produce the necessary mean particle size output for the target feedstock and biomass.

2. The apparatus of claim 1 wherein said particle size reduction member includes a housing, circulation means for continuously circulating said organic waste stream within said housing, and attrition means for contacting said organic waste stream during said circulation for causing attrition and reduction of the average particle size thereinto.

3. The apparatus of claim 2 wherein said attrition means comprises paddle members.

4. The apparatus of claim 2 wherein said attrition means includes bead members.

5. The apparatus of claim 1 wherein said biological reactor comprises an aerobic or anaerobic biological reactor.

6. The apparatus of claim 1 including a decanter associated with said outlet conduit for separating a clear decant from said converted biomass.

7. Apparatus for the treatment of an organic waste stream comprising
a biological reactor for the biological digestion of said organic waste stream to produce a converted biomass,
an inlet conduit for feeding said organic waste stream to said biological reactor, an outlet conduit for removing said converted biomass from said biological reactor, and
a particle size reduction member associated with said inlet conduit for mechanically reducing the average particle size of said organic waste stream to decrease the viscosity prior to its entry into said biological reactor,
said particle size reduction member being capable of reducing the viscosity of said organic waste stream to a viscosity of between about 500 and 2,500 centipoise by mechanical means while simultaneously mixing said organic waste,
**characterized in that** excess biomass that is generated in the bioreactor and/or unconverted particulate organics, are also introduced to the particle size reduction member,
and **in that** the apparatus comprises a means for measuring the biodegradation rate in said biological reactor at different feedstock viscosities,
wherein the impact of the feedstock viscosity on the biodegradation rates is determined, and
wherein the internal configuration of the particle size reduction member is then adjusted to produce a suitable feedstock viscosity for the target feedstock and biomass.

8. The apparatus of claim 7 wherein said particle size reduction member includes a housing, circulation means for continuously circulating said organic waste stream within said housing, and attrition means for contacting said organic waste stream during said circulation for causing attrition and reduction of the average particle size thereinto.

9. The apparatus of claim 7 wherein said attrition means comprises paddle members.

10. The apparatus of claim 7 wherein said attrition means includes bead members.

11. The apparatus of claim 7 wherein said biological reactor comprises an aerobic or anaerobic biological reactor.

12. A method for the treatment of an organic waste stream comprising providing said organic waste stream at a predetermined average particle size and an associated optimum biodegradability,
reducing said predetermined average particle size by a predetermined amount by mechanical attrition so as to provide a reduced particle size organic waste stream having an increased feedstock biodegradability, and
subjecting said reduced particle size organic waste stream to biological digestion in a biological reactor so as to convert at least a portion of said reduced particle size organic waste stream into a converted biomass,
**characterized in that** excess biomass that is generated in the bioreactor and/or unconverted particulate organics, are subjected to particle size reduction together with the organic waste stream,
and **in that** the method comprises measuring the rate of biodegradation in said biological reactor, and
adjusting said predetermined amount of said particle size reduction in order to optimize said rate of biodegradation in said biological reactor.

13. The method of claim 12 wherein said biological reactor comprises an aerobic or anaerobic biological reactor.

14. The method of claim 12 including maintaining said biological reactor at a temperature of between about 10°C and 100°C.

## Patentansprüche

1. Vorrichtung zur Behandlung eines organischen Abfallstroms umfassend einen biologischen Reaktor für den biologischen Aufschluss des organischen Abfallstroms zur Erzeugung einer umgewandelten Biomasse,
eine Einlassleitung zum Zuführen des organischen Abfallstroms zu dem biologischen Reaktor,
eine Auslassleitung zum Entfernen der umgewandelten Biomasse aus dem biologischen Reaktor,
ein Partikelgrößenreduzierungselement, das mit der Einlassleitung verbunden ist, um die durchschnittliche Partikelgröße des organischen Abfallstroms vor seinem Eintritt in den biologischen Reaktor mechanisch auf eine vorbestimmte Partikelgröße zu reduzieren,
wobei das Partikelgrößenreduzierungselement in der Lage ist, die mittlere Partikelgröße des organischen Abfallstroms durch mechanische Mittel zu reduzieren, während gleichzeitig der organische Abfall gemischt wird,
**dadurch gekennzeichnet, dass** überschüssige Biomasse, die in dem Bioreaktor erzeugt wird, und/oder nicht umgewandelte teilchenförmige organische Stoffe ebenfalls in das Partikelgrößenreduzierungselement eingeführt werden,
und dass die Vorrichtung ein Mittel zum Messen der Biodegradationsrate in dem biologischen Reaktor bei einer Vielzahl von Partikelgrößen umfasst,
wobei der Einfluss der mittleren Partikelgröße auf die Biodegradationsraten bestimmt wird, und
wobei die innere Konfiguration des Partikelgrößenreduzierungselements dann eingestellt wird, um die notwendige mittlere Partikelgrößenausgabe für das Zielrohmaterial und die Biomasse zu erzeugen.

2. Die Vorrichtung nach Anspruch 1, wobei das Partikelgrößenreduzierungselement ein Gehäuse, Zirkulationsmittel zum kontinuierlichen Zirkulieren des organischen Abfallstroms innerhalb des Gehäuses und Abriebmittel zum Kontaktieren des organischen Abfallstroms während des Umlaufs zum Verursachen von Abrieb und Verringerung der durchschnittlichen Teilchengröße darin aufweist.

3. Die Vorrichtung nach Anspruch 2, wobei die Abriebmittel Schaufelelemente umfassen.

4. Die Vorrichtung nach Anspruch 2, wobei die Abriebmittel Wulstelemente umfassen.

5. Die Vorrichtung nach Anspruch 1, wobei der biologische Reaktor einen aeroben oder anaeroben biologischen Reaktor umfasst.

6. Die Vorrichtung nach Anspruch 1 umfassend einen Dekanter, der mit der Auslassleitung verbunden ist, um ein klares Dekantiermittel von der umgewandelten Biomasse zu trennen.

7. Vorrichtung zur Behandlung eines organischen Abfallstroms umfassend einen biologischen Reaktor zum biologischen Aufschluss des organischen Abfallstroms zur Erzeugung einer umgewandelten Biomasse,
eine Einlassleitung zum Zuführen des organischen Abfallstroms zu dem biologischen Reaktor, eine Auslassleitung zum Entfernen der umgewandelten Biomasse aus dem biologischen Reaktor, und
ein Partikelgrößenreduzierungselement, das mit der Einlassleitung verbunden ist, um die durchschnittliche Partikelgröße des organischen Abfallstroms mechanisch zu verringern, um die Viskosität vor seinem Eintritt in den biologischen Reaktor zu verringern,
wobei das Partikelgrößenreduzierungselement in der Lage ist die Viskosität des organischen Abfallstroms auf eine Viskosität zwischen etwa 500 und 2.500 Centipoise durch mechanische Mittel zu reduzieren, während gleichzeitig der organische Abfall gemischt wird,
**dadurch gekennzeichnet, dass** überschüssige Biomasse, die in dem Bioreaktor erzeugt wird, und/oder nicht umgewandelte teilchenförmige organische Stoffe ebenfalls in das Partikelgrößenreduzierungselement eingeführt werden,
und dass die Vorrichtung ein Mittel zum Messen der Biodegradationsrate in dem biologischen Reaktor bei unterschiedlichen Rohmaterialviskositäten umfasst,
wobei der Einfluss der Rohmaterialviskosität auf die Biodegradationsraten bestimmt wird, und
wobei die innere Konfiguration des Partikelgrößenreduzierungselements dann eingestellt wird, um eine geeignete Rohmaterialviskosität für das Zielrohmaterial und die Biomasse zu erzeugen.

8. Die Vorrichtung nach Anspruch 7, wobei das Partikelgrößenreduzierungselement ein Gehäuse, Zirkulationsmittel zum kontinuierlichen Zirkulieren des organischen Abfallstroms innerhalb des Gehäuses und Abriebmittel zum Kontaktieren des organischen Abfallstroms während des Umlaufs zum Verursachen von Abrieb und Verringerung der durchschnittlichen Teilchengröße darin aufweist.

9. Die Vorrichtung nach Anspruch 7, wobei die Abriebmittel Schaufelelemente umfassen.

10. Die Vorrichtung nach Anspruch 7, wobei die Abriebmittel Wulstelemente umfassen.

11. Die Vorrichtung nach Anspruch 7, wobei der biologische Reaktor einen aeroben oder anaeroben biologischen Reaktor umfasst.

12. Verfahren zur Behandlung eines organischen Abfallstroms umfassend
Bereitstellen des organischen Abfallstroms mit einer vorbestimmten durchschnittlichen Partikelgröße und einer damit verbundenen optimalen biologischen Abbaubarkeit,
Reduzieren der vorbestimmten durchschnittlichen Partikelgröße um ein vorbestimmtes Maß durch mechanischen Abrieb, um einen organischen Abfallstrom mit verringerter Partikelgröße bereitzustellen, der eine erhöhte Bioabbaubarkeit des Rohmaterials aufweist, und
Unterziehen des organischen Abfallstroms mit verringerter Partikelgröße eines biologischen Aufschlusses in einem biologischen Reaktor, um mindestens einen Teil des organischen Abfallstroms mit verringerter Partikelgröße in eine umgewandelte Biomasse umzuwandeln,
**dadurch gekennzeichnet, dass** überschüssige Biomasse, die in dem Bioreaktor erzeugt wird, und/oder nicht umgewandelte teilchenförmige organische Stoffen einer Partikelgrößenreduktion zusammen mit dem organischen Abfallstrom unterworfen werden,
und dass das Verfahren das Messen der Biodegradationsrate in dem biologischen Reaktor umfasst, und
Einstellen des vorbestimmten Maßes der Partikelgrößenreduktion, um die Biodegradationsrate in dem biologischen Reaktor zu optimieren.

13. Das Verfahren nach Anspruch 12, wobei der biologische Reaktor einen aeroben oder anaeroben biologischen Reaktor umfasst.

14. Das Verfahren nach Anspruch 12, wobei der biologische Reaktor bei einer Temperatur zwischen etwa 10 °C und 100 °C gehalten wird.

## Revendications

1. Appareil pour le traitement d'un courant de déchets organiques comprenant un réacteur biologique pour la digestion biologique dudit courant de déchets organiques afin de produire une biomasse convertie,
un conduit d'entrée pour alimenter ledit courant de déchets organiques audit réacteur biologique,
un conduit de sortie pour enlever ladite biomasse convertie dudit réacteur biologique,
un élément de réduction de taille de particule associé avec ledit conduit d'entrée pour réduire mécaniquement la taille de particule moyenne dudit courant de déchets organiques à une taille de particule prédéterminée avant son entrée dans ledit réacteur biologique,
ledit élément de réduction de taille de particule étant capable de réduire la taille de particule moyenne dudit courant de déchets organiques par des moyens mécaniques tout en mélangeant simultanément lesdits déchets organiques,
**caractérisé en ce que** la biomasse en excès qui est produite dans le bioréacteur et/ou les produits organiques de particules non converties, sont aussi introduits à l'élément de réduction de taille de particule,
et **en ce que** l'appareil comprend un moyen pour mesurer le taux de biodégradation dans ledit réacteur biologique à une pluralité de tailles de particules,
l'impact de la taille moyenne de particules sur les taux de biodégradation étant déterminé, et la configuration interne de l'élément de réduction de taille de particule étant ensuite ajustée pour produire la sortie de taille de particule moyenne nécessaire pour l'alimentation cible et la biomasse.

2. Appareil selon la revendication 1, dans lequel ledit élément de réduction de taille de particule comprend un logement, des moyens de circulation pour la circulation en continu desdits déchets organiques dans ledit logement et des moyens d'attrition pour mettre en contact ledit courant de déchets organiques durant ladite circulation afin d'entraîner l'attrition et la réduction de la taille moyenne de particules à l'intérieur.

3. Appareil selon la revendication 2, dans lequel ledit moyen d'attrition comprend des éléments de rame.

4. Appareil selon la revendication 2, dans lequel ledit moyen d'attrition comprend des éléments de bille.

5. Appareil selon la revendication 1, dans lequel ledit réacteur biologique comprend un réacteur biologique aérobie ou anaérobie.

6. Appareil selon la revendication 1, comprenant un décanteur associé avec ledit conduit d'entrée pour séparer un produit de décantation clair de ladite biomasse convertie.

7. Appareil pour le traitement d'un courant de déchets organiques comprenant :
un réacteur biologique pour la digestion biologique dudit courant de déchets organiques afin de produire une biomasse convertie,
un conduit d'entrée pour alimenter ledit courant de déchets organiques audit réacteur biologique,
un conduit de sortie pour enlever ladite biomasse convertie dudit réacteur biologique, et
un élément de réduction de taille de particule associé avec ledit conduit d'entrée pour réduire mécaniquement la taille de particule moyenne dudit courant de déchets organiques afin de diminuer la viscosité avant son entrée dans ledit réacteur biologique,
ledit élément de réduction de taille de particule étant capable de réduire la viscosité dudit courant de déchets organiques à une viscosité d'entre environ 500 et 2500 centipoises par des moyens mécaniques tout en mélangeant simultanément lesdits déchets organiques,
**caractérisé en ce que** la biomasse en excès qui est produite dans le bioréacteur et/ou les produits organiques de particules non converties, sont aussi introduits à l'élément de réduction de taille de particule,
et **en ce que** l'appareil comprend un moyen pour mesurer le taux de biodégradation dans ledit bioréacteur à des viscosités d'alimentation différentes,
l'impact de la viscosité d'alimentation sur les taux de biodégradation étant déterminé, et
la configuration interne de l'élément de réduction de taille de particule étant ensuite ajustée pour produire une viscosité d'alimentation appropriée pour l'alimentation cible et la biomasse.

8. Appareil selon la revendication 7, dans lequel ledit élément de réduction de taille de particule comprend un logement, des moyens de circulation pour la circulation en continu dudit courant de déchets organiques dans ledit logement et des moyens d'attrition pour mettre en contact ledit courant de déchets organiques durant ladite circulation afin de provoquer l'attrition et la réduction de la taille moyenne de particules à l'intérieur.

9. Appareil selon la revendication 7, dans lequel ledit moyen d'attrition comprend des éléments de rame.

10. Appareil selon la revendication 7, dans lequel ledit moyen d'attrition comprend des éléments de bille.

11. Appareil selon la revendication 7, dans lequel ledit réacteur biologique comprend un réacteur biologique aérobie ou anaérobie.

12. Procédé pour le traitement d'un courant de déchets organiques comprenant :
la fourniture dudit courant de déchets organiques à une taille de particule moyenne prédéterminée et une biodégradabilité optimum associée,
la réduction de ladite taille de particule moyenne prédéterminée par une quantité prédéterminée par attrition mécanique pour fournir un courant de déchets organiques à taille de particule réduite ayant une biodégradabilité d'alimentation accrue, et
la soumission dudit courant de déchets organiques à taille de particule réduite à une digestion biologique dans un réacteur biologique pour convertir au moins une partie dudit courant de déchets organiques à taille de particule réduite en une biomasse convertie,
**caractérisé en ce que** la biomasse en excès qui est produite dans le bioréacteur et/ou les produits organiques de particules non converties, sont soumis à une réduction de taille de particule conjointement avec le courant de déchets organiques,
et **en ce que** le procédé comprend la mesure du taux de biodégradation dans ledit réacteur biologique, et
l'ajustement de ladite quantité prédéterminée de ladite réduction de taille de particule pour optimiser ledit taux de biodégradation dans ledit réacteur biologique.

13. Procédé selon la revendication 12, dans lequel ledit réacteur biologique comprend un réacteur biologique aérobie ou anaérobie.

14. Procédé selon la revendication 12, comprenant le maintien dudit réacteur biologique à une température d'entre environ 10 °C à 100 °C.
